# EUROPEAN PATENT APPLICATION

(11) **EP 4 513 943 A1**
(43) Date of publication of application: **26.02.2025**
(21) Application number: 23790869.4
(22) Date of filing: 20.02.2023
(51) Int. Cl.: H04W 24/02

(54) **COMMUNICATION METHOD AND APPARATUS**

(30) Priority: 21.04.2022 CN 202210423635
(71) Applicant: Huawei Technologies Co., Ltd., Shenzhen, Guangdong 518129 (CN)
(72) Inventor: QIANG, Li, Shenzhen, Guangdong 518129 (CN); WANG, Gang, Shenzhen, Guangdong 518129 (CN); HE, Yi, Shenzhen, Guangdong 518129 (CN); LI, Jiaojiao, Shenzhen, Guangdong 518129 (CN); LIU, Nannan, Shenzhen, Guangdong 518129 (CN)
(74) Representative: Gill Jennings & Every LLP
(86) International application number: PCT/CN2023/077262
(87) International publication number: WO 2023/202206

(57) **Abstract**

This application provides a communication method and apparatus, to resolve problems of low reliability of selecting a public land mobile network and/or a cell by a terminal device and poor communication quality of the terminal device, thereby improving reliability of selecting the public land mobile network and the cell by the terminal device and communication quality of the terminal device. The communication method and apparatus may be used in a mobile communication system. The method includes: obtaining a first threshold, and performing public land mobile network selection and/or cell selection based on the first threshold, where a channel state corresponding to the first threshold is better than a channel state corresponding to a second threshold, and the second threshold is used for cell selection of the terminal device and is not used for public land mobile network selection of the terminal device.

## Description

This application claims priority to Chinese Patent Application No. 202210423635.7, filed with the China National Intellectual Property Administration on April 21, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In the field of communication technologies, before accessing a cell, a terminal device needs to select a public land mobile network and a cell in the public land mobile network.

Currently, a public land mobile network accessed by the terminal device is determined based on a public land mobile network priority, and then a cell with a good channel state is selected from cells in the public land mobile network based on a second threshold, and the cell is accessed.

However, after a public land mobile network is selected based on the public land mobile network priority, cell selection can be performed only in the selected public land mobile network. When a channel state of each cell in the public land mobile network is very poor, the terminal device may probably be in a "hang" state in which "signaling transmission succeeds, but data transmission fails or a data transmission rate is very low". Even if the terminal device reselects a public land mobile network and a cell according to a priority rule, the terminal device may probably enter the "hang" state again, and cannot perform normal data communication or communication quality is very poor. Consequently, reliability of selecting the public land mobile network and the cell by the terminal device is low, and communication quality of the terminal device is also very poor.

### SUMMARY

Embodiments of this application provide a communication method and apparatus, to resolve problems of low reliability of selecting a public land mobile network and/or a cell by a terminal device and poor communication quality of the terminal device, thereby improving reliability of selecting the public land mobile network and/or the cell by the terminal device and communication quality of the terminal device.

According to a first aspect, a communication method is provided, and is applied to a terminal device. The communication method includes:
obtaining a first threshold, and performing public land mobile network selection and/or cell selection based on the first threshold. A channel state corresponding to the first threshold is better than a channel state corresponding to a second threshold, and the second threshold is used for cell selection of the terminal device and is not used for public land mobile network selection of the terminal device.

In an existing solution, the terminal device generally first selects a public land mobile network only based on a priority, and then selects a cell in the public land mobile network based on the second threshold. When a channel state of each cell in the selected public land mobile network is poor, the terminal device may probably always be in a "hang" state in which "signaling transmission succeeds, but data transmission fails or a data transmission rate is very low". In other words, even if the terminal device reselects a public land mobile network and a cell according to a priority rule and based on the second threshold, the terminal device may probably enter the "hang" state again, and cannot perform normal data communication. However, based on communication methods provided in the first aspect and a second aspect below, the terminal device may select a public land mobile network and/or a cell based on the first threshold, where the channel state corresponding to the first threshold is better than the channel state corresponding to the second threshold. In other words, based on an actual requirement that data transmission has a higher channel state requirement than signaling transmission, the terminal device can select, when performing public land mobile network selection, a public land mobile network including a cell whose channel state can satisfy a data transmission requirement, and then select the cell in the public land mobile network, to avoid the "hang" state, or reduce a probability of occurrence of the "hang" state. This improves reliability of selecting the public land mobile network and the cell by the terminal device.

In addition, the terminal device may select the public land mobile network and the cell based on the first threshold, where the channel state corresponding to the first threshold is better than the channel state corresponding to the second threshold. The terminal device can access a cell with a better channel state, and data and signaling can be transmitted between the terminal device and the cell based on a channel with better communication quality. This improves communication quality of the terminal device.

In a possible design solution, the obtaining a first threshold may include: determining the first threshold based on a first parameter; determining that an actual channel state reaches the channel state corresponding to the first threshold; and selecting a public land mobile network and/or a cell corresponding to the actual channel state to transmit data. The first parameter may include a baseline value, a step, a maximum quantity of steps, and/or a boundary threshold. The baseline value is an initial value of the first threshold. The step and a quantity of steps are used to determine a variation of the first threshold. The maximum quantity of steps is a maximum value of the quantity of steps. The boundary threshold is a maximum value or a minimum value of the first threshold. The step is a minimum value of the variation of the first threshold. In this way, when the quantity of steps is less than or equal to the maximum quantity of steps, and/or when the first threshold is less than or equal to the maximum value, or when the first threshold is greater than or equal to the minimum value, the first threshold is determined based on the baseline value and a gradually increased quantity of steps, until communication quality in the channel state corresponding to the first threshold can reach an expected value. When the actual channel state reaches the channel state corresponding to the first threshold, communication quality corresponding to the actual channel state can reach the expected value, to satisfy a data transmission requirement of the terminal device.

In another possible design solution, the obtaining a first threshold may include: receiving the first threshold or configuration information of the first threshold from a first network element. The first network element may include an access network device or a core network element.

In some embodiments, the first network element may be the access network device, the first threshold or the configuration information of the first threshold may be carried in a first message, and the first message may be a system message. In this way, the access network device may send the first threshold or the configuration information of the first threshold to each terminal device in a form of broadcasting the system message, so that a quantity of signaling interactions between the terminal device and the first network element can be reduced, signaling overheads of the first network element and the terminal device in the cell can be reduced, and efficiency of obtaining the first threshold by the terminal device can be improved.

In some other embodiments, the first network element may be the access network device, the first threshold or the configuration information of the first threshold may be carried in a first message, and the first message may be an RRC message. In this way, first thresholds or configuration information of the first thresholds may be customized for different terminal devices. For example, first thresholds or configuration information of the first thresholds may be customized based on types, locations, service types, or the like of the terminal devices, and the customized first thresholds or the customized configuration information of the first thresholds is sent to different terminal devices by using the RRC message. The customized first threshold or the customized configuration information of the first threshold can accurately reflect a data transmission requirement of each terminal device, to further improve accuracy of obtaining the first threshold.

In some other embodiments, the first network element may be the core network element, the first threshold or the configuration information of the first threshold may be carried in a first message, and the first message may be a NAS message. In this way, the NAS message may be used to customize different first thresholds or different configuration information of the first thresholds for different terminal devices respectively and correspondingly. For example, first thresholds that match terminal devices or configuration information of the first thresholds may be customized based on types, locations, service types, or the like of the terminal devices, and the customized first thresholds or the customized configuration information of the first thresholds is sent to different terminal devices by using the NAS message. The customized first threshold or the customized configuration information of the first threshold can accurately reflect a data transmission requirement of each terminal device, to further improve accuracy of obtaining the first threshold.

In a possible design solution, the communication method provided in the first aspect may further include: sending feedback information to the first network element. The feedback information indicates that the terminal device has successfully received the first message. In this way, the terminal device can notify the first network element that the first message has been successfully received, to prevent the first network element from repeatedly sending the first message to the terminal device. This reduces signaling overheads of the first network element, and improves communication efficiency between the first network element and the terminal device.

In a possible design solution, the communication method provided in the first aspect may further include: sending capability information. The capability information indicates that the terminal device is capable of performing public land mobile network selection and/or cell selection based on the first threshold. In this way, a network side device can customize the first threshold for the terminal device based on the capability information. The first threshold can accurately reflect a data transmission requirement of each terminal device, to improve accuracy of obtaining the first threshold.

According to a second aspect, a communication method is provided, and is applied to a first network element. The communication method includes: obtaining a first threshold or configuration information of the first threshold, where a channel state corresponding to the first threshold is better than a channel state corresponding to a second threshold, the first threshold is used for public land mobile network selection of a terminal device and/or cell selection of the terminal device, the second threshold is used for cell selection of the terminal device and is not used for public land mobile network selection of the terminal device, and the configuration information of the first threshold may also be referred to as a parameter related to the first threshold and is used to calculate the first threshold; and sending the first threshold or the configuration information of the first threshold to the terminal device.

In some embodiments, the first network element may be an access network device, the first threshold or the configuration information of the first threshold may be carried in a first message, and the first message may be a system message.

In some other embodiments, the first network element may be an access network device, the first threshold or the configuration information of the first threshold may be carried in a first message, and the first message may be an RRC message.

In some other embodiments, the first network element may be a core network element, the first threshold or the configuration information of the first threshold may be carried in a first message, and the first message may be a NAS message.

In a possible design solution, the communication method provided in the second aspect may further include: receiving feedback information. The feedback information indicates that the terminal device has successfully received the first message.

In a possible design solution, the communication method provided in the second aspect may further include: receiving capability information. The capability information indicates that the terminal device is capable of performing public land mobile network selection and/or cell selection based on the first threshold.

In some embodiments, the capability information may be from one or more of the following devices: the terminal device, the access network device, or a data storage network element.

In addition, for technical effects of the communication method provided in the second aspect, refer to the technical effects of the communication method provided in the first aspect. Details are not described herein again.

According to a third aspect, a communication apparatus is provided, and is used in a terminal device. The communication apparatus includes a processing module and a transceiver module. The processing module is configured to obtain a first threshold, where a channel state corresponding to the first threshold is better than a channel state corresponding to a second threshold, and the second threshold is used for cell selection of the terminal device and is not used for public land mobile network selection of the terminal device. The transceiver module is configured to perform public land mobile network selection and/or cell selection based on the first threshold.

In a possible design solution, the processing module may be configured to determine the first threshold based on a first parameter, where the first parameter may include a baseline value, a step, a maximum quantity of steps, and/or a boundary threshold, the baseline value is an initial value of the first threshold, the step and a quantity of steps are used to determine a variation of the first threshold, the maximum quantity of steps is a maximum value of the quantity of steps, the boundary threshold is a maximum value or a minimum value of the first threshold, and the step is a minimum value of the variation of the first threshold.

In some embodiments, the transceiver module may be configured to: determine that an actual channel state reaches the channel state corresponding to the first threshold, and select a public land mobile network and/or a cell corresponding to the actual channel state to transmit data.

In another possible design solution, the processing module may be configured to receive the first threshold or configuration information of the first threshold from a first network element, where the first network element may include an access network device or a core network element, and the configuration information of the first threshold is used to calculate the first threshold.

In some embodiments, the first network element may be the access network device, the first threshold may be carried in a first message, and the first message may be a system message.

In some other embodiments, the first network element may be the access network device, the first threshold or the configuration information of the first threshold may be carried in a first message, and the first message may be an RRC message.

In some other embodiments, the first network element may be the core network element, the first threshold or the configuration information of the first threshold may be carried in a first message, and the first message may be a NAS message.

In a possible design solution, the transceiver module may be configured to send feedback information to the first network element, where the feedback information indicates that the terminal device has successfully received the first message.

In a possible design solution, the transceiver module may be configured to send capability information, where the capability information indicates that the terminal device is capable of performing public land mobile network selection and/or cell selection based on the first threshold.

In addition, for technical effects of the communication apparatus provided in the third aspect, refer to the technical effects of the communication method provided in the first aspect. Details are not described herein again.

According to a fourth aspect, a communication apparatus is provided, and is used in a first network element. The communication apparatus includes a processing module and a transceiver module. The processing module is configured to obtain a first threshold, where a channel state corresponding to the first threshold is better than a channel state corresponding to a second threshold, the first threshold is used for public land mobile network selection of a terminal device and/or cell selection of the terminal device, and the second threshold is used for cell selection of the terminal device and is not used for public land mobile network selection of the terminal device. The transceiver module is configured to send the first threshold to the terminal device.

In some embodiments, the first network element may be an access network device, the first threshold or configuration information of the first threshold may be carried in a first message, and the first message may be a system message.

In some other embodiments, the first network element may be an access network device, the first threshold or configuration information of the first threshold may be carried in a first message, and the first message may be an RRC message.

In some other embodiments, the first network element may be a core network element, the first threshold or configuration information of the first threshold may be carried in a first message, and the first message may be a NAS message.

In a possible design solution, the transceiver module may be further configured to receive feedback information. The feedback information indicates that the terminal device has successfully received the first message.

In a possible design solution, the transceiver module may be further configured to receive capability information. The capability information indicates that the terminal device is capable of performing public land mobile network selection and/or cell selection based on the first threshold.

In some embodiments, the capability information may be from one or more of the following devices: the terminal device, the access network device, or a data storage network element.

In addition, for technical effects of the communication apparatus provided in the fourth aspect, refer to the technical effects of the communication method provided in the second aspect. Details are not described herein again.

According to a fifth aspect, a communication apparatus is provided. The communication apparatus includes a processor. The processor is coupled to a memory. The processor is configured to execute a computer program stored in the memory, to enable the communication apparatus to perform any method according to any one of the first aspect and possible design manners of the first aspect or any method according to any one of the second aspect and possible design manners of the second aspect.

According to a sixth aspect, a communication apparatus is provided. The communication apparatus includes a processor and a memory. The memory is configured to store computer instructions. When the processor executes the computer instructions, the communication apparatus is enabled to perform any method according to any one of the first aspect and possible design manners of the first aspect or any method according to any one of the second aspect and possible design manners of the second aspect.

According to a seventh aspect, a communication apparatus is provided. The communication apparatus includes a processor and an interface circuit. The interface circuit is configured to: receive code instructions and transmit the code instructions to the processor. The processor is configured to run the code instructions to perform any method according to any one of the first aspect and possible design manners of the first aspect or any method according to any one of the second aspect and possible design manners of the second aspect.

According to an eighth aspect, a communication apparatus is provided. The communication apparatus includes a processor and a transceiver. The transceiver is used for information exchange between the communication apparatus and another communication apparatus. The processor executes program instructions to perform any method according to any one of the first aspect and possible design manners of the first aspect or any method according to any one of the second aspect and possible design manners of the second aspect.

In addition, for technical effects of the communication apparatuses provided in the fifth aspect to the eighth aspect, refer to the technical effects of the communication methods provided in the first aspect and the second aspect. Details are not described herein again.

According to a ninth aspect, a computer-readable storage medium is provided. The computer-readable storage medium includes a computer program or instructions. When the computer program or the instructions are run on a computer, the computer is enabled to perform any method according to any one of the first aspect and possible design manners of the first aspect or any method according to any one of the second aspect and possible design manners of the second aspect.

According to a tenth aspect, a computer program product is provided. The computer program product includes a computer program or instructions. When the computer program or the instructions are run on a computer, the computer is enabled to perform any method according to any one of the first aspect and possible design manners of the first aspect or any method according to any one of the second aspect and possible design manners of the second aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a schematic flowchart of determining a first threshold according to an embodiment of this application;
FIG. 4 is a diagram 1 of a structure of a communication apparatus according to an embodiment of this application;
FIG. 5 is a diagram 2 of a structure of a communication apparatus according to an embodiment of this application; and
FIG. 6 is a diagram 3 of a structure of a communication apparatus according to an embodiment of this application.

### DESCRIPTION OF EMBODIMENTS

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. The terms "of (of)", "corresponding (corresponding, relevant)", and "corresponding (corresponding)" may be interchangeably used sometimes. It should be noted that expressed meanings are consistent when differences of the terms are not emphasized.

In embodiments of this application, a subscript such as W₁ may sometimes be written in a non-subscript form such as W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of network architectures and emergence of new service scenarios, the technical solutions provided in embodiments of this application are also applicable to similar technical problems.

In the field of communication technologies, before accessing a cell, a terminal device needs to select a public land mobile network (public land mobile network, PLMN) and a cell in the public land mobile network, to access the cell to transmit data.

Currently, a public land mobile network accessed by the terminal device is determined based on a public land mobile network priority, and then a cell is selected from a plurality of cells in the public land mobile network based on a second threshold, and the cell is accessed.

However, after the to-be-accessed public land mobile network is selected based on a priority order of the public land mobile network, cell selection can be performed only in a same public land mobile network. When a channel state of each cell in the public land mobile network is poor, the terminal device may probably be in a "hang" state in which "signaling transmission succeeds, but data transmission fails or a data transmission rate is very low". Even if there is another public land mobile network with a better channel state, a cell in the another public land mobile network with a better channel state cannot be accessed. In addition, even if the terminal device reselects a public land mobile network and a cell according to a priority rule, the terminal device may probably enter the "hang" state again, and cannot perform normal data communication or communication quality is very poor. Consequently, reliability of selecting the public land mobile network and the cell by the terminal device is low, and the communication quality of the terminal device is also very poor.

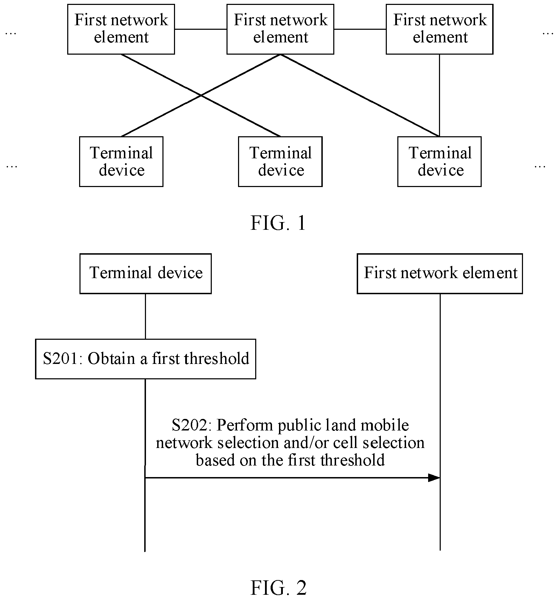

To resolve the foregoing problems, embodiments of this application provide a communication method and apparatus. For ease of understanding embodiments of this application, a communication system shown in FIG. 1 is first used as an example to describe in detail a communication system applicable to embodiments of this application.

For example, FIG. 1 is a diagram of an architecture of a communication system according to an embodiment of this application.

As shown in FIG. 1, the communication system may include a first network element and a terminal device.

The first network element may include an access network device or a core network element.

It should be understood that the access network device may be a device located on a network side of the foregoing communication system, a device or a network element that has a wireless transceiver function, or a chip or a chip system that may be disposed in the device. The access network device may include but is not limited to an access point (access point, AP) in a wireless fidelity (wireless fidelity, Wi-Fi) system, for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP, or transmission point, TP), or the like. The access network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. Alternatively, the access network device may be a network node that constitutes a gNB or a transmission point, for example, a baseband unit (BBU) or a distributed unit (distributed unit, DU), a roadside unit (roadside unit, RSU) having a base station function, or the like.

It may be understood that the core network element may be a core network element in a mobile communication network. For example, when the mobile communication network is a 5th generation mobile communication network, the core network element may include an access and mobility management function (access and mobility management function, AMF) network element or an operation, administration and maintenance (operation, administration and maintenance, OAM) network element.

The foregoing terminal device is a terminal that accesses the foregoing communication system and that has a wireless transceiver function, or a chip or a chip system that can be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in this embodiment of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, an RSU with a terminal function, or the like. The terminal device in this application may alternatively be an in-vehicle module, an in-vehicle assembly, an in-vehicle component, an in-vehicle chip, or an in-vehicle unit that is built in a vehicle as one or more components or units. The vehicle may implement the communication method in this application by using the in-vehicle module, the in-vehicle assembly, the in-vehicle component, the in-vehicle chip, or the in-vehicle unit that is built in the vehicle.

It should be noted that the communication method provided in this embodiment of this application is applicable to communication between the terminal device and the first network element shown in FIG. 1. For specific implementation, refer to the following method embodiments. Details are not described herein again.

It should be noted that, the solutions in embodiments of this application may be further applied to another communication system, and a corresponding name may also be replaced with a name of a corresponding function in the another communication system.

It should be understood that FIG. 1 is merely a simplified diagram of an example for ease of understanding, and the communication system may further include another network device or network element. A 5G mobile communication system is used as an example. The another network device or network element may include a network element such as an authentication server function (authentication server function, AUSF) network element, a policy control function (policy control function, PCF) network element, or a session management function (session management function, SMF) network element, which is not shown in FIG. 1.

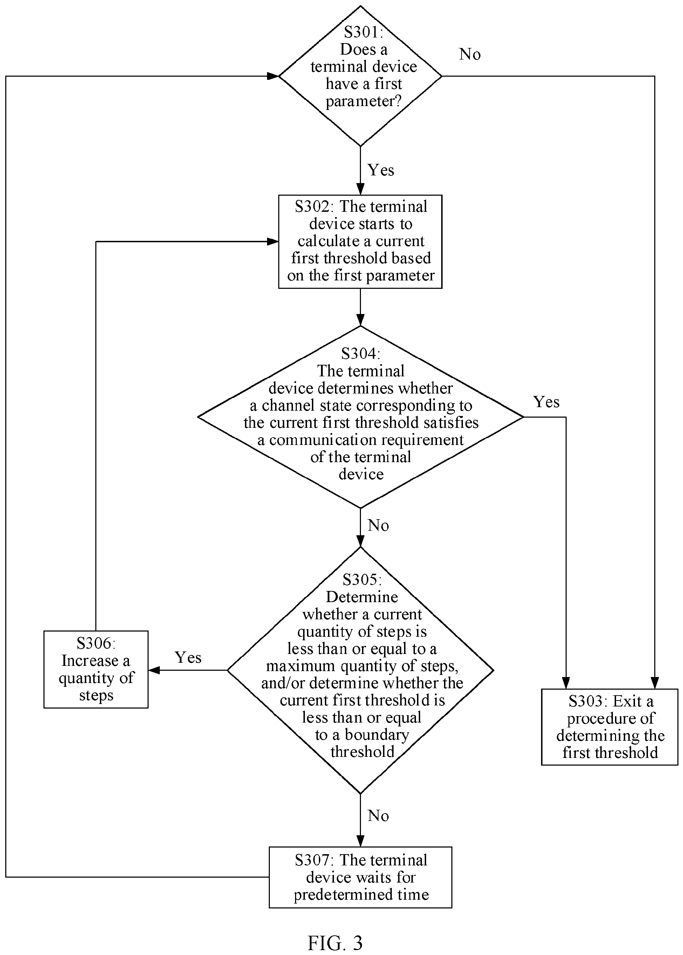

The following describes in detail the communication method provided in embodiments of this application with reference to FIG. 2 and FIG. 3.

For example, FIG. 2 is a schematic flowchart of a communication method according to an embodiment of this application. The communication method is applicable to communication between the terminal device and the first network element shown in FIG. 1.

As shown in FIG. 2, the communication method applicable to the communication system shown in FIG. 1 includes the following steps.

S201: The terminal device obtains a first threshold.

A channel state corresponding to the first threshold is better than a channel state corresponding to a second threshold, and the second threshold is used for cell selection of the terminal device and is not used for public land mobile network selection of the terminal device.

Optionally, the first threshold may be a value of any parameter used to describe the channel state. For example, the first threshold may include a value of one or more of the following parameters: a reference signal received power (reference signal received power, RSRP), reference signal received quality (reference signal received quality, RSRQ), a signal to interference plus noise ratio (signal to interference plus noise ratio, SINR), an available bandwidth, a delay, a bit error rate, and the like.

It may be understood that the channel state indicates a communication state, and may be understood as cell quality or a communication link state.

In some implementations, when setting the first threshold, the terminal device, the first network element, or a storage device may set the value of the parameter used to describe the channel state, to ensure that the channel state corresponding to the first threshold is better than the channel state corresponding to the second threshold. For example, a weight value may be assigned to each parameter used to describe the channel state, weighted calculation is performed based on the weight value to obtain a weighted value corresponding to the first threshold and a weighted value corresponding to the second threshold, and the weighted value corresponding to the first threshold is compared with the weighted value corresponding to the second threshold.

It should be understood that the weight value corresponding to each parameter used to describe the channel state may be set based on an actual application scenario. This is not limited herein. It may be understood that a larger value of a parameter that is positively correlated with the channel state indicates a better channel state corresponding to the parameter. For example, the parameter that is positively correlated with the channel state may include parameters such as the RSRP, the RSRQ, the SINR, and the available bandwidth.

Further, when the channel state corresponding to the first threshold is compared with the channel state corresponding to the second threshold based on the value of the parameter that is positively correlated with the channel state, a value of a parameter that is positively correlated with the channel state and that is corresponding to the first threshold is greater than a value of a parameter that is positively correlated with the channel state and that is corresponding to the second threshold. The RSRP is used as an example. The first threshold is an RSRP 1, the second threshold is an RSRP 2, and the RSRP 1>the RSRP 2. In this case, the channel state corresponding to the first threshold is better than the channel state corresponding to the second threshold. It may be understood that, for a value of a parameter that is negatively correlated with the channel state, a smaller value of the parameter indicates a better channel state corresponding to the parameter. For example, the parameter that is negatively correlated with the channel state may include a parameter such as the bit error rate, the delay, or a packet loss rate.

Further, when the channel state corresponding to the first threshold is compared with the channel state corresponding to the second threshold based on the value of the parameter that is negatively correlated with the channel state, a value of a parameter that is negatively correlated with the channel state and that is corresponding to the first threshold is less than a value of a parameter that is negatively correlated with the channel state and that is corresponding to the second threshold. The bit error rate is used as an example. The first threshold is a first bit error rate, the second threshold is a second bit error rate, and the first bit error rate is less than the second bit error rate. In this case, the channel state corresponding to the first threshold is better than the channel state corresponding to the second threshold.

It should be understood that the first threshold or configuration information of the first threshold may be configured based on a requirement of an actual scenario, and the configuration information of the first threshold may be understood as a parameter related to the first threshold. For example, first thresholds or configuration information of the first thresholds of terminal devices of a same type is consistent, in other words, first thresholds or configuration information of the first thresholds of all mobile phones may be set to be correspondingly consistent, or first thresholds or configuration information of the first thresholds of all smart water meters may be set to be correspondingly consistent, or first thresholds or configuration information of the first thresholds of all in-vehicle devices may be set to be correspondingly consistent. For another example, first thresholds or configuration information of the first thresholds of terminal devices in a same PLMN may be set to be correspondingly consistent. The foregoing merely lists manners of setting the first threshold or the configuration information of the first threshold in two different application scenarios, and does not limit a manner of configuring the first threshold or the configuration information of the first threshold.

It may be understood that, the terminal device can select, based on the first threshold from cells in different PLMNs, a cell with a good channel state, and access the cell. In other words, a cell whose actual channel state reaches the channel state of the first threshold is selected and accessed. The cell whose actual channel state reaches the channel state of the first threshold includes a cell whose actual channel state is better than or the same as the channel state of the first threshold. It may be understood that, in a conventional technology, the second threshold is used by the terminal device to select a PLMN based on a PLMN priority, and a cell whose actual channel state reaches the second threshold is selected from the PLMN and accessed. In other words, the second threshold is used only for cell selection of the terminal device.

It may be understood that in S201, the terminal device may obtain the first threshold locally or obtain the first threshold from the first network element. FIG. 2 shows only a manner of obtaining the first threshold locally. Specifically, the terminal device may obtain the first threshold locally, or obtain the first threshold through calculation based on the configuration information that is of the first threshold and that is from the first network element or the local configuration information of the first threshold, or may receive the first threshold from the first network element.

Optionally, S201 may include the following step.

Step 1: The terminal device determines the first threshold based on a first parameter.

The first parameter may include a baseline value, a step, a maximum quantity of steps, and/or a boundary threshold. The baseline value is an initial value of the first threshold. The step and a quantity of steps are used to determine a variation of the first threshold. The maximum quantity of steps is a maximum value of the quantity of steps. The boundary threshold is a maximum value or a minimum value of the first threshold. The step is a minimum value of the variation of the first threshold.

It should be understood that the first parameter is a parameter used by the terminal device to determine the first threshold. Configuration information of the first threshold in the following step 2 is a parameter that is received by the terminal device from the first network element and that is used to determine the first threshold. The first parameter may be consistent with or inconsistent with the configuration information of the first threshold. This is not limited herein.

It should be understood that a manner of configuring the baseline value is not limited herein. In some implementations, the baseline value may be configured on the terminal device based on an actual application scenario and stored in the terminal device. The terminal device may locally obtain the baseline value, or the terminal device may obtain the baseline value from the first network element.

For example, the terminal device obtains a configured offset and/or scale factor and the second threshold locally or from the first network element, and the terminal device obtains the baseline value through calculation based on the second threshold and the offset, and/or the scale factor. The offset and the scale factor may be configured based on an actual application scenario. It may be understood that the terminal device may obtain the second threshold or configuration information of the second threshold locally, or may obtain the second threshold or the configuration information of the second threshold from the first network element. When the terminal device obtains the second threshold or the configuration information of the second threshold from the first network element, the second threshold or the configuration information of the second threshold may be carried in an access stratum (access stratum, AS) message or a non-access stratum (non-access stratum, NAS) message.

A specific example is as follows. The offset may be configured to be 10. Based on a second threshold b, a baseline value a=b+10. Alternatively, the scale factor may be configured to be 1.2, and a baseline value a=1.2*b. Alternatively, the offset may be configured to be 10, the scale factor may be configured to be 1.2, and a baseline value a=1.2*(b+10). The foregoing is merely an example of several manners of calculating the baseline value based on the offset and/or the scale factor, and does not constitute a limitation on the baseline value.

It may be understood that, when the first threshold is positively correlated with the channel state, the offset is greater than 0 and/or the scale factor is greater than 1. When the first threshold is negatively correlated with the channel state, the offset is less than 0 and/or the scale factor is less than 1.

It should be understood that the step, the maximum quantity of steps, and the boundary threshold in the first parameter may be set based on an actual application scenario. This is not limited herein.

For example, FIG. 3 is a schematic flowchart of determining the first threshold according to an embodiment of this application.

Optionally, step 1 may include the following steps.

S301: The terminal device determines whether the terminal device has the first parameter.

It may be understood that before S301, it may be determined that the terminal device obtains the first threshold. For example, when the terminal device is just powered on, the terminal device receives, from the first network element in the communication system, signaling about obtaining the first threshold, a quantity of times that the terminal device fails to send data reaches a specified quantity of times, a data transmission rate of the terminal device is lower than a specified rate, the terminal device is located in a specified area and the area cannot support communication of the terminal device, and/or the terminal device needs to initiate a specified service, the terminal device determines that the first threshold is obtained.

Optionally, when it is determined, in S301, that the terminal device has the first parameter, S302 is performed. When it is determined, in S301, that the terminal device does not have the first parameter, S303 is performed. S302 and S303 are specifically as follows.

S302: The terminal device starts to calculate a current first threshold based on the first parameter.

For ease of description, a symbol may be used to represent the first parameter. For example, p may be used to represent the first threshold, m may be used to represent the baseline value, l may be used to represent the step, and n may be used to represent the quantity of steps. It should be understood that the first parameter may be described in another manner. This is not limited herein.

In some embodiments, a manner of calculating the first threshold is as follows: p=m+l*n, and an initial value of the quantity n of steps may be set to 0.

In some other embodiments, a manner of calculating the first threshold is as follows: p = m * l⁽ⁿ⁾, and an initial value of the quantity n of steps may be set to 0.

S303: The terminal device exits a procedure of determining the first threshold.

Optionally, after the terminal device performs S302, the terminal device performs the following steps.

S304: The terminal device determines whether a channel state corresponding to the current first threshold satisfies a communication requirement of the terminal device.

Optionally, after the terminal device determines, in S304, that the channel state corresponding to the first threshold satisfies the communication requirement of the terminal device, S303 is performed. After the terminal device determines, in S304, that the channel state corresponding to the first threshold does not satisfy the communication requirement of the terminal device, S305 is performed. S305 is specifically as follows.

S305: Determine whether a current quantity of steps is less than or equal to the maximum quantity of steps, and/or determine whether the current first threshold is less than or equal to the boundary threshold.

It may be understood that, S305 is applicable to a case in which the first threshold is positively correlated with the channel state, and in this case, the boundary threshold is the maximum value of the first threshold.

Optionally, after the first threshold is negatively correlated with the channel state, and the terminal device determines, in S304, that the channel state corresponding to the first threshold does not satisfy the communication requirement of the terminal device, step (1) is performed. Step (1) is specifically as follows.

Step (1): Determine whether the current quantity of steps is less than or equal to the maximum quantity of steps, and/or determine whether the current first threshold is greater than or equal to the boundary threshold.

It may be understood that, step (1) is applicable to a case in which the first threshold is negatively correlated with the channel state, and in this case, the boundary threshold is the minimum value of the first threshold.

It may be understood that, after choosing to perform S305 or step (1), the terminal device performs S306. S306 is specifically as follows.

S306: Increase the quantity of steps.

For example, the first threshold is calculated by using p=m+l*n. When an initial quantity of steps is set to 0, the first threshold p=m+l*0. After the quantity of steps is increased, the quantity of steps may change to 1, and the first threshold p=m+l*1.

For example, the first threshold is calculated by using p = m * l⁽ⁿ⁾. When an initial quantity of steps is set to 0, the first threshold p = m * l⁽⁰⁾. After the quantity of steps is increased, the quantity of steps may change to 1, and the first threshold p = m * l⁽¹⁾.

After S306 is performed, this process goes to S302.

Optionally, when the first threshold is positively correlated with the channel state, and when the current quantity of steps is not less than or equal to the maximum quantity of steps and/or it is determined that the current first threshold is not less than or equal to the boundary threshold, S307 is performed.

Optionally, when the first threshold is negatively correlated with the channel state, and when the current quantity of steps is not less than or equal to the maximum quantity of steps and/or it is determined that the current first threshold is not greater than or equal to the boundary threshold, S307 is performed. S307 is specifically as follows.

S307: The terminal device waits for predetermined time.

It may be understood that the predetermined time may be set based on an actual requirement. This is not limited herein.

Optionally, after S307 is performed, the terminal device restarts to determine the first threshold from S301.

It may be understood that, when the first threshold is positively correlated with the channel state, and when the quantity of steps is less than or equal to the maximum quantity of steps and/or the first threshold is less than or equal to the boundary threshold, the first threshold is determined based on the baseline value and a gradually increased quantity of steps, until communication quality (for example, a data transmission rate, a data bit error rate, and a data transmission success rate) in the channel state corresponding to the first threshold can reach an expected value. When the actual channel state reaches the channel state corresponding to the first threshold, communication quality corresponding to the actual channel state can reach the expected value, to ensure that a data transmission requirement of the terminal device can be satisfied when the terminal device communicates with the cell.

It may be understood that, when the first threshold is negatively correlated with the channel state, and when the quantity of steps is less than or equal to the maximum quantity of steps and/or the first threshold is greater than or equal to the boundary threshold, the first threshold is determined based on the baseline value and a gradually increased quantity of steps, until communication quality (for example, a data transmission rate, a data bit error rate, and a data transmission success rate) in the channel state corresponding to the first threshold can reach an expected value. When the actual channel state reaches the channel state corresponding to the first threshold, communication quality corresponding to the actual channel state can reach the expected value, to ensure that a data transmission requirement of the terminal device can be satisfied when the terminal device communicates with the cell.

Optionally, S201 may include the following step.

Step 2: The first network element obtains the first threshold or the configuration information of the first threshold, and the terminal device receives the first threshold or the configuration information of the first threshold from the first network element.

The first network element may include an access network device or a core network element, and the configuration information of the first threshold is used to calculate the first threshold.

Optionally, the first network element may be the access network device, the first threshold or the configuration information of the first threshold may be carried in a first message, and the first message may be a system message.

In some implementations, the first network element may receive the first threshold or the configuration information of the first threshold from the core network element. For example, in a 5G mobile communication system, the first network element may receive the first threshold or the configuration information of the first threshold from an AMF network element or OAM, and the first threshold or the configuration information of the first threshold may be carried in an N2 message.

It should be understood that the first threshold or the configuration information of the first threshold may be configured based on an actual application scenario. This is not limited herein.

It may be understood that the access network device may send the first threshold or the configuration information of the first threshold to each terminal device in a form of broadcasting the system message, so that a quantity of signaling interactions between the terminal device and the first network element can be reduced, signaling overheads of the first network element and the terminal device in the cell can be reduced, and efficiency of obtaining the first threshold by the terminal device can be improved.

Optionally, the first network element may be the access network device, the first threshold or the configuration information of the first threshold may be carried in a first message, and the first message may be a radio resource control (radio resource control, RRC) message.

In some implementations, the first network element may receive the first threshold or the configuration information of the first threshold from the core network element. The core network element may obtain the first threshold or the configuration information of the first threshold locally, or may receive the first threshold or the configuration information of the first threshold from a data storage network element. For example, in a 5G mobile communication system, the first network element may receive the first threshold or the configuration information of the first threshold from an AMF network element or OAM, and the first threshold or the configuration information of the first threshold may be carried in an N2 message. The data storage network element may include a unified data management (unified data management, UDM) network element or a unified data repository (unified data repository, UDR) network element.

It may be understood that the RRC message may be used to customize different first thresholds or different configuration information of the first thresholds for different terminal devices respectively and correspondingly. For example, first thresholds that match terminal devices or configuration information of the first thresholds may be customized based on types, locations, service types, or the like of the terminal devices, and the customized first thresholds or the customized configuration information of the first thresholds is sent to different terminal devices by using the RRC message. The customized first threshold or the customized configuration information of the first threshold can accurately reflect a data transmission requirement of each terminal device, to further improve accuracy of obtaining the first threshold.

Optionally, the first network element may be the core network element, the first threshold or the configuration information of the first threshold may be carried in a first message, and the first message may be a NAS message.

It may be understood that the first network element may obtain the first threshold or the configuration information of the first threshold locally or from the core network element, or may receive the first threshold or the configuration information of the first threshold from the storage device. This is similar to a manner in which the first network element obtains the first threshold or the configuration information of the first threshold when the first message is the RRC message, and details are not described herein again.

It should be understood that the NAS message may be used to customize different first thresholds or different configuration information of the first thresholds for different terminal devices respectively and correspondingly. For example, first thresholds that match terminal devices or configuration information of the first thresholds may be customized based on types, locations, service types, or the like of the terminal devices, and the customized first thresholds or the customized configuration information of the first thresholds is sent to different terminal devices by using the NAS message. The customized first threshold or the customized configuration information of the first threshold can accurately reflect a data transmission requirement of each terminal device, to further improve accuracy of obtaining the first threshold. Optionally, when the first message is the RRC message or the NAS message, the communication method provided in this embodiment of this application may further include the following step.

Step A: The terminal device sends feedback information to the first network element, and the first network element receives the feedback information.

The feedback information indicates that the terminal device has successfully received the first message.

It may be understood that the first network element is prevented from repeatedly sending the first message to the terminal device. This reduces signaling overheads of the first network element, and improves communication efficiency between the first network element and the terminal device.

Optionally, when the first message is the RRC message or the NAS message, the communication method provided in this embodiment of this application may further include the following step.

Step B: The terminal device sends capability information.

The capability information indicates that the terminal device is capable of performing public land mobile network selection and/or cell selection based on the first threshold.

In some embodiments, when the first network element is the access network device, the terminal device may send the capability information to the access network device, and then the access network device sends the capability information to the core network element. The terminal device may alternatively send the capability information to the core network element.

For example, in a 5G mobile communication system, when the first network element is the access network device, the capability information may be carried in the RRC message. The terminal device sends the capability information to the access network device. Then, the access network device sends the capability information carried in the N2 message to the AMF network element. The AMF network element determines that the terminal device is capable of performing public land mobile network selection and/or cell selection based on the first threshold.

For another example, in a 5G mobile communication system, when the first network element is the access network device, the capability information may be carried in the NAS message. The terminal device sends the capability information to the AMF network element. Then, the AMF network element determines that the terminal device is capable of performing public land mobile network selection and/or cell selection based on the first threshold.

In some other embodiments, when the first network element is the core network element, the terminal device may send the capability information to the access network device, and then the access network device sends the capability information to the core network element. The terminal device may alternatively send the capability information to the core network element.

For example, in a 5G mobile communication system, when the first network element is the AMF network element, the capability information may be carried in the NAS message. The terminal device sends the capability information to the AMF network element. Then, the AMF network element determines that the terminal device is capable of performing public land mobile network selection and/or cell selection based on the first threshold.

For another example, in a 5G mobile communication system, when the first network element is the AMF network element, the capability information may be carried in the RRC message. The terminal device sends the capability information to the access network device. Then, the access network device sends the capability information carried in the N2 message to the AMF network element. The AMF network element determines that the terminal device is capable of performing public land mobile network selection and/or cell selection based on the first threshold.

Optionally, the capability information is from one or more of the following devices: the terminal device, the access network device, or a data storage network element.

It may be understood that the data storage network element is similar to the data storage network element in step 2, and may also include the UDM network element or the UDR network element.

It may be understood that, a network side device can customize the first threshold for the terminal device based on the capability information. The first threshold can accurately reflect a data transmission requirement of each terminal device, to improve accuracy of obtaining the first threshold.

S202: Perform public land mobile network selection and/or cell selection based on the first threshold.

Optionally, S202 may include the following steps.

Step 3: The terminal device determines that the actual channel state reaches the channel state corresponding to the first threshold.

Step 4: The terminal device selects a public land mobile network and/or a cell corresponding to the actual channel state to transmit data.

In an implementation, when obtaining the first threshold, the terminal device performs public land mobile network selection and/or cell selection based on the first threshold.

In another implementation, the terminal device obtains the first threshold and the second threshold, and may compare the channel state corresponding to the first threshold with the channel state corresponding to the second threshold. When the channel state corresponding to the first threshold is better than the channel state corresponding to the second threshold, the terminal device performs public land mobile network selection and/or cell selection based on the first threshold. When the channel state corresponding to the first threshold is worse than the channel state corresponding to the second threshold, the terminal device performs cell selection based on the second threshold.

In conclusion, in an existing solution, the terminal device generally first selects a public land mobile network only based on a priority, and then selects a cell in the public land mobile network based on the second threshold. When a channel state of each cell in the selected public land mobile network is poor, even if the terminal device selects the cell in the public land mobile network again based on the second threshold, the terminal device may probably always be in a "hang" state in which "signaling transmission succeeds, but data transmission fails or a data transmission rate is very low". In other words, even if the terminal device reselects a public land mobile network and a cell according to a priority rule and based on the second threshold, the terminal device may probably enter the "hang" state again, and cannot perform normal data communication. However, based on the communication method shown in FIG. 2, the terminal device may select a public land mobile network and a cell based on the first threshold, where the channel state corresponding to the first threshold is better than the channel state corresponding to the second threshold. In other words, based on an actual requirement that data transmission has a higher channel state requirement than signaling transmission, the terminal device can select, when performing public land mobile network selection, a public land mobile network including a cell whose channel state can satisfy a data transmission requirement, and then select the cell in the public land mobile network, to avoid the "hang" state, or reduce a probability of occurrence of the "hang" state. This improves reliability of selecting the public land mobile network and the cell by the terminal device.

Further, the terminal device may select the public land mobile network and the cell based on the first threshold, where the channel state corresponding to the first threshold is better than the channel state corresponding to the second threshold. The terminal device can access a cell with a better channel state, and data and signaling can be transmitted between the terminal device and the cell based on a channel with better communication quality. This improves communication quality of the terminal device.

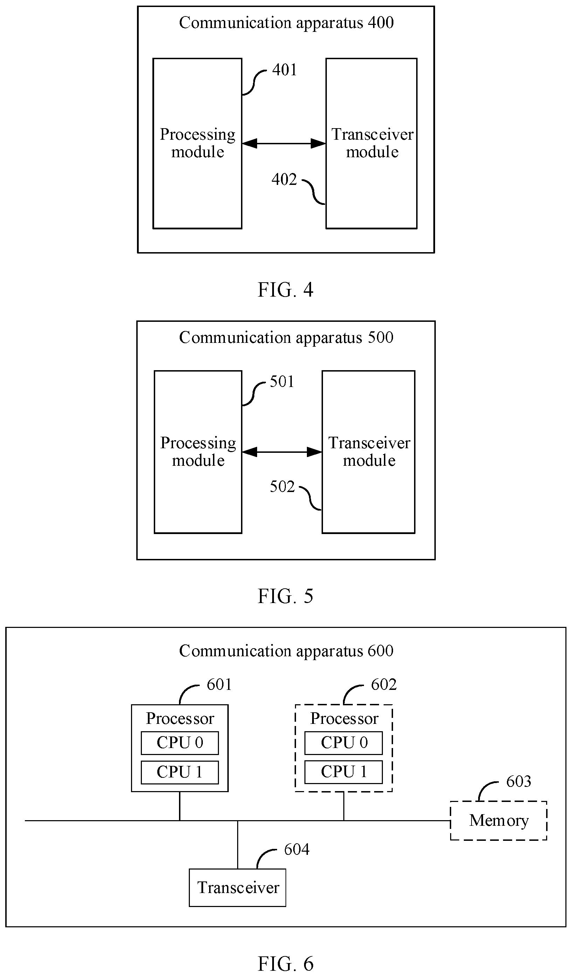

The foregoing describes, in detail with reference to FIG. 2 and FIG. 3, the communication method provided in embodiments of this application. The following describes, in detail with reference to FIG. 4 to FIG. 6, a communication apparatus configured to perform the communication method according to embodiments of this application.

For example, FIG. 4 is a diagram 1 of a structure of a communication apparatus according to an embodiment of this application.

As shown in FIG. 4, the communication apparatus 400 includes a processing module 401 and a transceiver module 402. For ease of description, FIG. 4 shows only main components of the communication apparatus.

In some embodiments, the communication apparatus 400 may be used in the communication system shown in FIG. 1, and perform a function of obtaining the first threshold by the terminal device and performing public land mobile network selection and/or cell selection based on the first threshold in the communication method shown in FIG. 2 or FIG. 3.

The processing module 401 is configured to obtain the first threshold, where a channel state corresponding to the first threshold is better than a channel state corresponding to a second threshold, and the second threshold is used for cell selection of the terminal device and is not used for public land mobile network selection of the terminal device.

The transceiver module 402 is configured to perform public land mobile network selection and/or cell selection based on the first threshold.

Optionally, the processing module 401 may be configured to determine the first threshold based on a first parameter, where the first parameter may include a baseline value, a step, a maximum quantity of steps, and/or a boundary threshold, the baseline value is an initial value of the first threshold, the step and a quantity of steps are used to determine a variation of the first threshold, the maximum quantity of steps is a maximum value of the quantity of steps, the boundary threshold is a maximum value or a minimum value of the first threshold, and the step is a minimum value of the variation of the first threshold.

Further, the transceiver module 402 may be configured to: determine that an actual channel state reaches the channel state corresponding to the first threshold, and select a public land mobile network and a cell corresponding to the actual channel state to transmit data.

Optionally, the processing module 401 may be configured to receive the first threshold or configuration information of the first threshold from a first network element, where the first network element may include an access network device or a core network element, and the configuration information of the first threshold is used to calculate the first threshold.

Further, the first network element may be the access network device, the first threshold may be carried in a first message, and the first message may be a system message.

Further, the first network element may be the access network device, the first threshold may be carried in a first message, and the first message may be an RRC message.

Further, the first network element may be the core network element, the first threshold may be carried in a first message, and the first message may be a NAS message.

Further, the transceiver module 402 may be configured to send feedback information to the first network element, where the feedback information indicates that the terminal device has successfully received the first message.

Further, the transceiver module 402 may be configured to send capability information, where the capability information indicates that the terminal device is capable of performing public land mobile network selection and/or cell selection based on the first threshold.

It should be understood that the processing module 401 in the communication apparatus 400 may be implemented by a transceiver or a transceiver-related circuit component, and may be a transceiver or a transceiver unit. The transceiver module 402 may be implemented by a processor or a processor-related circuit component, and may be a processor or a processing unit. The processing module 401 and the transceiver module 402 may be integrated into a same processing module.

It should be noted that, the communication apparatus 400 may be a terminal device, or may be a chip (system) or another component or part that can be disposed in the terminal device, or may be an apparatus including the terminal device. This is not limited in this application.

In addition, for technical effects of the communication apparatus 400, refer to the technical effects of the communication method shown in FIG. 2. Details are not described herein again.

For example, FIG. 5 is a diagram 2 of a structure of a communication apparatus according to an embodiment of this application. For ease of description, FIG. 5 shows only main components of the communication apparatus.

In some embodiments, the communication apparatus 500 may be used in the communication system shown in FIG. 1, and perform a function of obtaining the first threshold or the configuration information of the first threshold by the first network element and sending the first threshold or the configuration information of the first threshold to the terminal device in the communication method shown in FIG. 2 or FIG. 3.

As shown in FIG. 5, the communication apparatus 500 includes a processing module 501 and a transceiver module 502.

The processing module 501 is configured to obtain the first threshold or the configuration information of the first threshold, where a channel state corresponding to the first threshold is better than a channel state corresponding to a second threshold, the first threshold is used for public land mobile network selection of the terminal device and/or cell selection of the terminal device, the second threshold is used for cell selection of the terminal device and is not used for public land mobile network selection of the terminal device, and the configuration information of the first threshold is used to calculate the first threshold. The transceiver module 502 is configured to send the first threshold or the configuration information of the first threshold to the terminal device.

Optionally, the first network element may be an access network device, the first threshold may be carried in a first message, and the first message may be a system message.

Optionally, the first network element may be an access network device, the first threshold may be carried in a first message, and the first message may be an RRC message.

Optionally, the first network element may be a core network element, the first threshold may be carried in a first message, and the first message may be a NAS message.

Further, the transceiver module 502 may be configured to receive feedback information. The feedback information indicates that the terminal device has successfully received the first message.

Further, the transceiver module 502 may be configured to receive capability information. The capability information indicates that the terminal device is capable of performing public land mobile network selection and/or cell selection based on the first threshold.

Further, the capability information may be from one or more of the following devices: the terminal device, the access network device, or a data storage network element.

It should be understood that the processing module 501 in the communication apparatus 500 may be implemented by a transceiver or a transceiver-related circuit component, and may be a transceiver or a transceiver unit. The transceiver module 502 may be implemented by a processor or a processor-related circuit component, and may be a processor or a processing unit. The processing module 501 and the transceiver module 502 may be integrated into a same processing module.

It should be noted that, the communication apparatus 500 may be a first network element, or may be a chip (system) or another component or part that can be disposed in the first network element, or may be an apparatus including the first network element. This is not limited in this application.

In addition, for technical effects of the communication apparatus 500, refer to the technical effects of the communication method provided in FIG. 2. Details are not described herein again.

For example, FIG. 6 is a diagram 3 of a structure of a communication apparatus according to an embodiment of this application.

For example, FIG. 6 is a diagram 3 of a structure of a communication apparatus according to an embodiment of this application. As shown in FIG. 6, the communication apparatus 600 includes a processor 601. The processor 601 may be coupled to a memory (not shown in FIG. 6), and the processor is configured to perform the communication method shown in FIG. 6.

For ease of description, FIG. 6 shows only main components of the communication apparatus.

In some embodiments, the communication apparatus 600 may be used in the communication system shown in FIG. 1, to perform a function of obtaining the first threshold by the terminal device and performing public land mobile network selection and/or cell selection based on the first threshold, or perform a function of obtaining the first threshold or the configuration information of the first threshold by the first network element and sending the first threshold or the configuration information of the first threshold to the terminal device in the communication method shown in FIG. 2 or FIG. 3.

Optionally, the communication apparatus 600 may further include a memory 603.

The memory 603 is configured to store computer instructions. When the processor 601 executes the computer instructions, the communication apparatus 600 is enabled to perform any communication method provided in FIG. 2 or FIG. 3.

The following describes each component of the communication apparatus 600 in detail with reference to FIG. 6.

A processor is a control center of the communication apparatus 600, and may be the processor 601, or may be a general term of a plurality of processing elements. For example, the processor is one or more central processing units (central processing units, CPUs) or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 601 may perform various functions of the communication apparatus 600 by running or executing a software program stored in the memory 603 and invoking data stored in the memory 603.

In specific implementation, in an embodiment, the processor may include one or more CPUs, for example, a CPU 0 and a CPU 1 shown in FIG. 6.

In specific implementation, in an embodiment, the communication apparatus 600 may alternatively include a plurality of processors, for example, the processor 601 and a processor 602 (shown by dashed lines in FIG. 6) shown in FIG. 6. Each of the processors may be a single-core processor (single-CPU), or may be a multi-core processor (multi-CPU). The processor herein may be one or more devices, circuits, and/or processing cores configured to process data (for example, computer program instructions).

The memory 603 is configured to store a software program for performing the solutions in this application, and the processor 601 and the processor 602 control execution of the software program. For specific implementation, refer to the foregoing method embodiments. Details are not described herein again.

Optionally, the memory 603 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. This is not limited thereto. The memory 603 may be integrated with the processor 601, or may exist independently, and is coupled to the processor 601 through an interface circuit (not shown in FIG. 6) in the communication apparatus 600. This is not specifically limited in this embodiment of this application.

Optionally, the communication apparatus 600 further includes a transceiver 604. The transceiver 604 is configured to communicate with another communication apparatus. For example, the communication apparatus 600 is a terminal device, and the transceiver 604 may be configured to communicate with non-terrestrial transmission point that belongs to a same cell set in a non-terrestrial communication network, or communicate with another terminal device. For another example, the communication apparatus 600 is a non-terrestrial transmission point that belongs to a same cell set in a non-terrestrial communication network, and the transceiver 604 may be configured to communicate with a terminal device, communicate with another non-terrestrial transmission point that belongs to the same cell set in the non-terrestrial communication network, or communicate with a non-terrestrial transmission point in another non-terrestrial communication network.

Optionally, the transceiver 604 may include a receiver and a transmitter (not separately shown in FIG. 6). The receiver is configured to implement a receiving function, and the transmitter is configured to implement a sending function.

Optionally, the transceiver 604 may be integrated with the processor 601, or may exist independently, and is coupled to the processor 601 through an interface circuit (not shown in FIG. 6) in the communication apparatus 600. This is not specifically limited in this embodiment of this application.

It should be noted that the structure of the communication apparatus 600 shown in FIG. 6 does not constitute a limitation on the communication apparatus. An actual communication apparatus may include more or fewer components than those shown in the figure, or combine some components, or have different component arrangement.

It should be noted that, the communication apparatus 600 may be a terminal device, or may be a chip (system) or another component or part that can be disposed in the terminal device, or may be an apparatus including the terminal device. This is not limited in this application. Alternatively, the communication apparatus 600 may be an access network device or a core network element in a mobile communication network, or may be a chip (system) or another component or part that can be disposed in the access network device or the core network element, or may be an apparatus including the access network device or the core network element. This is not limited in this application.

In addition, for technical effects of the communication apparatus 600, refer to the technical effects of the communication method in FIG. 2. Details are not described herein again.

In addition, for technical effects of the communication apparatus 600, refer to the technical effects of the communication method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: only A exists, both A and B exist, and only B exists. A and B may be singular or plural. In addition, the character "/" in this specification usually indicates an "or" relationship between the associated objects, but may alternatively indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly learn that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or parts may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, wherein the communication method comprises:
obtaining a first threshold, wherein a channel state corresponding to the first threshold is better than a channel state corresponding to a second threshold, and the second threshold is used for cell selection of the terminal device and is not used for public land mobile network selection of the terminal device; and
performing public land mobile network selection and/or cell selection based on the first threshold.

2. The communication method according to claim 1, wherein the obtaining a first threshold comprises:
determining the first threshold based on a first parameter, wherein the first parameter comprises a baseline value, a step, a maximum quantity of steps, and/or a boundary threshold, the baseline value is an initial value of the first threshold, the step and a quantity of steps are used to determine a variation of the first threshold, the maximum quantity of steps is a maximum value of the quantity of steps, the boundary threshold is a maximum value and/or a minimum value of the first threshold, and the step is a minimum value of the variation of the first threshold.

3. The communication method according to claim 1 or 2, wherein the performing public land mobile network selection and/or cell selection based on the first threshold comprises:
determining that an actual channel state reaches the channel state corresponding to the first threshold; and
selecting a public land mobile network and/or a cell corresponding to the actual channel state to transmit data.

4. The communication method according to claim 1, wherein the obtaining a first threshold comprises:
receiving the first threshold or configuration information of the first threshold from a first network element, wherein the first network element comprises an access network device or a core network element, and the configuration information of the first threshold is used to calculate the first threshold.

5. The communication method according to claim 4, wherein the first network element is the access network device, the first threshold or the configuration information of the first threshold is carried in a first message, and the first message is a system message.

6. The communication method according to claim 4, wherein the first network element is the access network device, the first threshold or the configuration information of the first threshold is carried in a first message, and the first message is an RRC message.

7. The communication method according to claim 4, wherein the first network element is the core network element, the first threshold or the configuration information of the first threshold is carried in a first message, and the first message is a NAS message.

8. The communication method according to claim 6 or 7, wherein the communication method further comprises:
sending feedback information to the first network element, wherein the feedback information indicates that the terminal device has successfully received the first message.

9. The communication method according to any one of claims 6 to 8, further comprising:
sending capability information, wherein the capability information indicates that the terminal device is capable of performing public land mobile network selection and/or cell selection based on the first threshold.

10. A communication method, applied to a first network element, wherein the communication method comprises:
obtaining a first threshold or configuration information of the first threshold, wherein a channel state corresponding to the first threshold is better than a channel state corresponding to a second threshold, the first threshold is used for public land mobile network selection of a terminal device and/or cell selection of the terminal device, the second threshold is used for cell selection of the terminal device and is not used for public land mobile network selection of the terminal device, and the configuration information of the first threshold is used to calculate the first threshold; and
sending the first threshold or the configuration information of the first threshold to the terminal device.

11. The communication method according to claim 10, wherein the first network element is an access network device, the first threshold or the configuration information of the first threshold is carried in a first message, and the first message is a system message.

12. The communication method according to claim 10, wherein the first network element is an access network device, the first threshold or the configuration information of the first threshold is carried in a first message, and the first message is an RRC message.

13. The communication method according to claim 10, wherein the first network element is a core network element, the first threshold or the configuration information of the first threshold is carried in a first message, and the first message is a NAS message.

14. The communication method according to claim 12 or 13, wherein the communication method further comprises:
receiving feedback information, wherein the feedback information indicates that the terminal device has successfully received the first message.

15. The communication method according to any one of claims 12 to 14, wherein the communication method further comprises:
receiving capability information, wherein the capability information indicates that the terminal device is capable of performing public land mobile network selection and/or cell selection based on the first threshold.

16. The communication method according to claim 15, wherein the capability information is from one or more of the following devices: the terminal device, the access network device, or a data storage network element.

17. A communication apparatus, used in a terminal device, wherein the communication apparatus comprises a processing module and a transceiver module, wherein
the processing module is configured to obtain a first threshold, wherein a channel state corresponding to the first threshold is better than a channel state corresponding to a second threshold, and the second threshold is used for cell selection of the terminal device and is not used for public land mobile network selection of the terminal device; and
the transceiver module is configured to perform public land mobile network selection and/or cell selection based on the first threshold.

18. The communication apparatus according to claim 17, wherein the processing module is configured to:
determine the first threshold based on a first parameter, wherein the first parameter comprises a baseline value, a step, a maximum quantity of steps, and/or a boundary threshold, the baseline value is an initial value of the first threshold, the step and a quantity of steps are used to determine a variation of the first threshold, the maximum quantity of steps is a maximum value of the quantity of steps, the boundary threshold is a maximum value or a minimum value of the first threshold, and the step is a minimum value of the variation of the first threshold.

19. The communication apparatus according to claim 17, wherein the processing module is configured to:
receive the first threshold or configuration information of the first threshold from a first network element, wherein the first network element comprises an access network device or a core network element, and the configuration information of the first threshold is used to calculate the first threshold.

20. The communication apparatus according to claim 19, wherein the first network element is the access network device, the first threshold or the configuration information of the first threshold is carried in a first message, and the first message is a system message.

21. The communication apparatus according to claim 19, wherein the first network element is the access network device, the first threshold or the configuration information of the first threshold is carried in a first message, and the first message is an RRC message.

22. The communication apparatus according to claim 19, wherein the first network element is the core network element, the first threshold or the configuration information of the first threshold is carried in a first message, and the first message is a NAS message.

23. The communication apparatus according to claim 21 or 22, wherein the transceiver module is configured to:
send feedback information to the first network element, wherein the feedback information indicates that the terminal device has successfully received the first message.

24. The communication apparatus according to any one of claims 21 to 23, wherein the transceiver module is configured to:
send capability information, wherein the capability information indicates that the terminal device is capable of performing public land mobile network selection and/or cell selection based on the first threshold.

25. A communication apparatus, used in a first network element, wherein the communication apparatus comprises a processing module and a transceiver module, wherein
the processing module is configured to obtain a first threshold or configuration information of the first threshold, wherein a channel state corresponding to the first threshold is better than a channel state corresponding to a second threshold, the first threshold is used for public land mobile network selection of a terminal device and/or cell selection of the terminal device, the second threshold is used for cell selection of the terminal device and is not used for public land mobile network selection of the terminal device, and the configuration information of the first threshold is used to calculate the first threshold; and
the transceiver module is configured to send the first threshold or the configuration information of the first threshold to the terminal device.

26. A communication apparatus, comprising a processor, wherein the processor is coupled to a memory; and
the processor is configured to execute a computer program stored in the memory, to enable the communication apparatus to perform the communication method according to any one of claims 1 to 16.

27. A communication apparatus, comprising a processor and an interface circuit, wherein
the interface circuit is configured to: receive code instructions and transmit the code instructions to the processor; and
the processor is configured to run the code instructions to perform the communication method according to any one of claims 1 to 16.

28. A communication apparatus, wherein the communication apparatus comprises a processor and a transceiver, the transceiver is used for information exchange between the communication apparatus and another communication apparatus, and the processor executes program instructions to perform the communication method according to any one of claims 1 to 16.

29. A computer-readable storage medium, wherein the computer-readable storage medium comprises a computer program or instructions, and when the computer program or the instructions are run on a computer, the computer is enabled to perform the communication method according to any one of claims 1 to 16.

30. A computer program product, wherein the computer program product comprises a computer program or instructions, and when the computer program or the instructions are run on a computer, the computer is enabled to perform the communication method according to any one of claims 1 to 16.
